# EUROPEAN PATENT SPECIFICATION

(11) **EP 1 173 363 B1**
(45) Date of publication and mention of the grant of the patent: **01.09.2004**
(21) Application number: 00917520.9
(22) Date of filing: 17.04.2000
(51) Int. Cl.: B65B 23/22, B65B 19/34, B65D 85/42

(54) **A DIE FOR PACKING PET PREFORMS**
MATRIZE ZUM VERPACKEN VON PET-VORFORMEN
MATRICE POUR L'EMBALLAGE DE PREFORMES EN PET

(30) Priority: 26.04.1999 PL 33280899
(43) Date of publication of application: 23.01.2002
(73) Proprietor: Karch, Jan, 41-940 Piekary Slaskie (PL); Gluch, Miroslaw, 41-534 Katowice (PL)
(72) Inventor: Karch, Jan, 41-940 Piekary Slaskie (PL); Gluch, Miroslaw, 41-534 Katowice (PL)
(74) Representative: Hano, Christian, Dipl.-Ing.
(86) International application number: PCT/PL2000/000029
(87) International publication number: WO 2000/064748

(56) References cited:
- BE-A- 569 572
- US-A- 4 233 799
- US-A- 5 024 330

## Description

The invention refers to a die for packing PET preforms

Until now, after being moulded on the injection moulding press, PET preforms have been thrown down into a container. When the container is filled up to the top, the preforms are moved to a bulk container and in such a form they are delivered to the customers for further processing. Due to their incidental arrangement, the capacity of the bulk containers is small.

The problem underlying the invention is to provide a die for packing PET preforms by which the amount of PET performs to be packed in a bulk container can be increased.

This problem is solved by a die comprising the features of claim 1. Preferred embodiments of the die according to the invention are claimed in claims 2 to 6.

The die according to the invention allows to pack a high amount of PET performs in a bulk container.

**Example:** A group of three cylindrical cavities of the same depth is simultaneously filled up with the same number of preforms in such an arrangement that the upper parts of the lower preforms are in contact with the bottom of the upper preforms. When the specified level of the packing is reached, the second group of cylindrical cavities of the same depth is to be filled up, and the flanges of the previously packed preforms serve as a guide for the preforms of the second group that are being packed. When the specified level of the packing is reached, the third group of cylindrical cavities of the same depth is to be filled up, and the flanges of the previously packed preforms serve as a guide for the preforms of the third group that are being packed.

Embodiments of the die according to the present invention are further discussed below by means of the accompanying drawings, wherein
Fig. 1 shows a cross section of a die through groups of cylindrical cavities;
Fig. 2 is a top view of the die shown in Fig. 2;

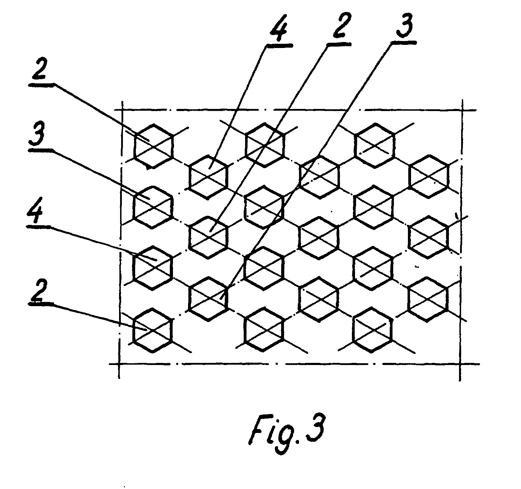

Fig. 3 is a top view of the die with the cavities having a shape of a regular prism with a hexagonal base.

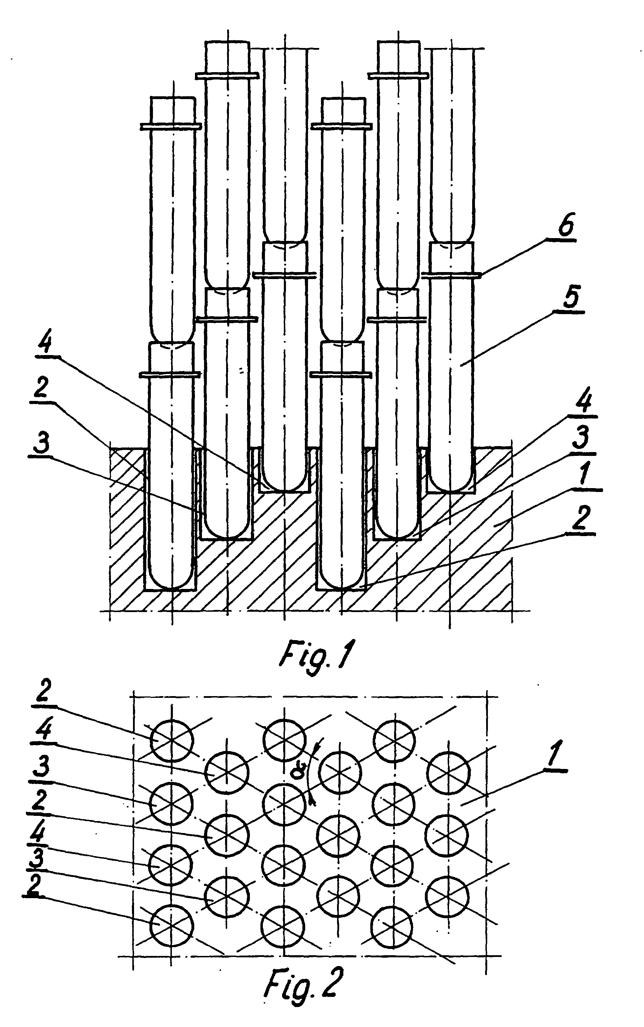

As it is shown in the Fig. 1, the die 1 has a series of cavities 2, 3 and 4 of different depth, into which preforms 5 are introduced, preferably ones with flanges 6. The groups of cavities 2 have the same depth or their depth is slightly different, however, it is much different from that of the other groups of cavities 3 and 4, out of which the groups of cavities 3 have the same depth or their depth is slightly differentiated but it is much different from that of the remaining groups of cavities 2 and 4. similarly, the groups of cavities 4 have the same depth or their depth is slightly different but considerably different from that of other groups of cavities 2 and 3.

Geometrical centres of the neighbouring cavities 2, 3 and 4 intersect at an angle α of 60°.

## Claims

1. A die for packing PET preforms, **characterized by** a first group of cavities (2), a second group of cavities (3) and a third group of cavities (4), the cavities (2, 3, 4) having an identical outline, the geometrical centers of neighboring cavities (2, 3, 4) of the first, the second and the third group intersecting at an angle (α) of 60°, and each group of cavities (2), (3) and (4) having a different depth.

2. A die according to claim 1, **characterized in that** the cavities (2, 3, 4) have a circular outline.

3. A die according to claim 1, **characterized in that** the cavities (2, 3, 4) have an outline of a polygon.

4. A die according to claim 3, **characterized in that** the cavities (2, 3, 4) have an outline of a regular polygon.

5. A die according to one of the preceding claims, **characterized in that** each internal cavity (2) of the first group borders on three cavities (3) of the second group and on three cavities (4) of the third group, and each internal cavity of the second group (3) borders on three cavities (2) of the first group and three cavities (4) of the third group and each internal cavity (4) of the third group borders on three cavities (2) of the first group and three cavities (3) of the second group.

6. A die according to one of the preceding claims **characterized in that** that the cavities (2) of the first group have an identical depth different from the depth of the cavities (3) of the second group or the cavities (4) of the third group, the cavities (3) of the second group have an identical depth different from the depth of the cavities (2) of the first group or cavities (4) of the third group, and the cavities (4) of the third group have an identical depth different from the depth of the cavities (2) of the first group or the cavities (3) of the second group.

## Patentansprüche

1. Matrize zum Verpacken von PET-Vorformen, **gekennzeichnet durch** eine erste Gruppe von Hohlräumen (2), **durch** eine zweite Gruppe von Hohlräumen (3) und **durch** eine dritte Gruppe von Hohlräumen (4), wobei die Hohlräume (2, 3, 4) einen identischen Umriss haben, sich die geometrischen Mitten benachbarter Hohlräume (2, 3, 4) der ersten, zweiten und dritten Gruppe in einem Winkel (α) von 60° schneiden und jede Gruppe von Hohlräumen (2, 3, 4) eine andere Tiefe hat.

2. Matrize nach Anspruch 1, **dadurch gekennzeichnet, dass** die Hohlräume (2, 3, 4) einen kreisförmigen Umriss haben.

3. Matrize nach Anspruch 1, **dadurch gekennzeichnet, dass** die Hohlräume (2, 3, 4) den Umriss eines Polygons haben.

4. Matrize nach Anspruch 3, **dadurch gekennzeichnet, dass** die Hohlräume (2, 3, 4) den Umriss eines regelmäßigen Polygons haben.

5. Matrize nach einem der vorhergehenden Ansprüche, **dadurch gekennzeichnet, dass** jeder innere Hohlraum (2) der ersten Gruppe an drei Hohlräume (3) der zweiten Gruppe und an drei Hohlräume (4) der dritten Gruppe, jeder innere Hohlraum der zweiten Gruppe (3) an drei Hohlräume (2) der ersten Gruppe und an drei Hohlräume (4) der dritten Gruppe und jeder innere Hohlraum (4) der dritten Gruppe an drei Hohlräume (2) der ersten Gruppe und an drei Hohlräume (3) der zweiten Gruppe angrenzt.

6. Matrize nach einem der vorhergehenden Ansprüche, **dadurch gekennzeichnet, dass** die Hohlräume (2) der ersten Gruppe eine identische Tiefe haben, die sich von der Tiefe der Hohlräume (3) der zweiten Gruppe oder der Hohlräume (4) der dritten Gruppe unterscheidet, dass die Hohlräume (3) der zweiten Gruppe eine identische Tiefe haben, die sich von der Tiefe der Hohlräume (2) der ersten Gruppe oder der Hohlräume (4) der dritten Gruppe unterscheidet, und dass die Hohlräume (4) der dritten Gruppe eine identische Tiefe haben, die sich von der Tiefe der Hohlräume (2) der ersten Gruppe oder der Hohlräume (3) der zweiten Gruppe unterscheidet.

## Revendications

1. Matrice pour empiler des préformes en PET **caractérisée par** un premier groupe de cavités (2), un deuxième groupe de cavités (3) et un troisième groupe de cavités (4), les cavités (2, 3, 4) présentant un contour identique, les centres géométriques des cavités voisines (2, 3, 4) du premier groupe, du deuxième groupe et du troisième groupe se coupant à un angle (α) de 60°, et chaque groupe de cavités (2), (3) et (4) ayant une profondeur différente.

2. Matrice selon la revendication 1, **caractérisée en ce que** les cavités (2, 3, 4) présentent un contour circulaire.

3. Matrice selon la revendication 1, **caractérisée en ce que** les cavités (2, 3, 4) présentent un contour polygonal.

4. Matrice selon la revendication 3, **caractérisée en ce que** les cavités (2, 3, 4) présentent un contour polygonal régulier.

5. Matrice selon l'une des revendications précédentes, **caractérisée en ce que** chaque cavité interne (2) du premier groupe borde trois cavités (3) du deuxième groupe et trois cavités (4) du troisième groupe, et chaque cavité interne du deuxième groupe (3) borde trois cavités (2) du premier groupe et trois cavités (4) du troisième groupe et chaque cavité interne (4) du troisième groupe borde trois cavités (2) du premier groupe et trois cavités (3) du deuxième groupe.

6. Matrice selon l'une des revendications précédentes, **caractérisée en ce que** les cavités (2) du premier groupe ont une profondeur identique différente de la profondeur des cavités (3) du deuxième groupe ou des cavités (4) du troisième groupe, les cavités (3) du deuxième groupe ont une profondeur identique différente de la profondeur des cavités (2) du premier groupe ou des cavités (4) du troisième groupe, et les cavités (4) du troisième groupe ont une profondeur identique différente de la profondeur des cavités (2) du premier groupe ou des cavités (3) du deuxième groupe.
